(19)

Europäisches
Patentamt
European
Patent Office
Office européen
des brevets

(11)  **EP 2 503 290 A1**

(12)  **EUROPEAN PATENT APPLICATION**

(43) Date of publication:
26.09.2012 Bulletin 2012/39

(51) Int Cl.:
*G01C 21/32* (2006.01)   *G01C 21/36* (2006.01)

(21) Application number: 11002359.5

(22) Date of filing: 22.03.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Harman Becker Automotive Systems GmbH**
**76307 Karlsbad (DE)**

(72) Inventors:
• **Spindler, CC**
**76135 Karlsruhe (DE)**

• **Ivanov, Vladimir**
**81375 München (DE)**
• **Fischer, Martin**
**80805 München (DE)**
• **Schütz, Simon**
**70195 Stuttgart (DE)**
• **Pryakhin, Alexey**
**81476 München (DE)**

(74) Representative: **Grünecker, Kinkeldey,**
**Stockmair & Schwanhäusser**
**Leopoldstrasse 4**
**80802 München (DE)**

(54)  **Curved labeling in digital maps**

(57)    The present invention relates to a method for labeling a map element of a digital map, comprising storing coordinate values associated with a map element, assigning a label to the map element and displaying the map element and displaying the assigned label in the digital map based on the stored coordinate values such that the label is adapted to the geometric form of the map element.

FIG. 1

EP 2 503 290 A1

**Description**

**Field of Invention**

The present invention relates to digital maps representing towns and landscapes that can be used for route guidance by a navigation system and, in particular, it relates to the labeling of map elements.

**Prior Art**

The use of navigation systems, in particular, in vehicles as automobiles becomes increasingly prevalent. Usually on board navigation computer systems analyze the combined data provided by GPS (Global Positioning System), motion sensors as ABS wheel sensors as well as a digital map and thereby determine the actual position and velocity of a vehicle with increasing preciseness.

Known navigation systems typically make use electronic digital maps to represent cartographic features, as streets, buildings and rivers, and make use of a medium such as a compact disk or a digital video disc to store the data that relates to the cartographic features. After map matching the actual position of the user is indicated in the digital map. By acoustic and/or visualized information the user is guided to the predetermined destination.

Some navigation systems are able to display detailed digital maps indicating routes to destinations, the types of manoeuvres to be taken at various locations as junctions as well as different kinds of points of interest as, for example, gas stations or restaurants and also landmarks. As the vehicle changes position, either the vehicle position mark on the displayed image changes, or the digital map is scrolled, while the vehicle position mark is fixed at a predetermined position.

More elaborated navigation systems provide enlarged views, for example, of junctions on the guide route, where the driver should turn, in order to help the driver to identify the route to be taken to the predetermined destination more accurately. The displayed images represent simplified synthesized views from the driver's perspective. However, a 2-dimensional representation can confuse the driver, in particular, if roads are intersecting a different height levels or in rotary turns with roads in close proximity. Herein, the terms 'road' and 'street' are used in an interchangeable manner.

Recently, various navigation systems have been developed that have provided algorithms for transforming data from a geographic database into a 3-dimensional perspective view which, in principle, is much more easily understood by many drivers. Elaborated systems allow for displaying the intersection approached by the vehicle at variable angles relative to the road depending on the complexity of the intersection. Herein, the terms 'intersection' and 'junction' are used in an interchangeable way.

In order to provide the navigation functions the navigation systems make use of one or more detailed databases that comprise data which represent physical features of a geographic region. The employed navigation database may comprise a main image file comprising bitmap images consisting, e.g., of bitmap of the road geometry signposts, landmarks, the skyline etc. The database may comprise a main image file comprising bitmap images and/or vector graphics consisting, e.g., of bitmap of the road geometry, signposts, landmarks, the skyline etc.

In the digital maps particular map elements, as rivers, mountains, roads or particular areas, are displayed supplemented by names (labels) of the respective map elements. For example, a winding river is labeled by the name of the river or a mountain range is displayed together with the name of the mountain range.

However, both in two-dimensional and three-dimensional digital map representations conventional labeling by characters representing the names of map elements cannot be realized in satisfying manner with respect to an appropriate positioning that allows for uniquely identifying the respective map elements. In particular, in the case of three-dimensional digital maps part of the names used for labeling map elements may even be hidden by the map element depending on the perspective in which the map is displayed to a user. Unintentional hiding of parts of a map element can also happen in two-dimensional digital maps. Thus, there is a need for an improved labeling of map elements of digital maps.

**Description of the Invention**

The present invention addresses the above-mentioned need and provides a method for labeling a map element of a digital map, comprising
storing coordinate values associated with a map element;
assigning a label to the map element; and
displaying the map element and displaying the assigned label in the digital map based on the stored coordinate values such that the label is adapted to the geometric form of the map element.

The method may further comprise representing the map element by at least one spline comprising vertices and storing coordinate values (of coordinates in the digital map) derived from coordinate values (the ones that are stored and associated with the map element) of at least some of the vertices of the at least one spline. In this case also, the map element is displayed and the assigned label is displayed in the digital map based on the stored coordinate values such that the label is adapted to the geometric form of the map element.

A map element is a graphical element of the map representing some physical object, for example, a building, a road, a mountain, a river, a lake, etc. The map element can be given by a bitmap or a vector graphic object.

A label assigned to the map element is some name identifying the map element, for example, the name of a building, a road, a mountain, a river, a lake, etc. The assigned label in the digital map is displayed at the appropriate place in an appropriate manner after reading the stored coordinate values.

The label can be represented, i.e. drawn, by means of one or more splines. The map element may also be represented, i.e. drawn, by means of one or more splines. The term "spline" denotes a function that is defined piecewise by polynomials (see detailed description below).

Whereas the map element, for example, a river, a mountain range, a road, etc., is represented in the digital map, for example, by means of a spline, the vertices used for the representation can also be used for the labeling of the map element according to the present invention. The map element, in general, may be defined by a list of points (coordinates) or vectors that can be used for defining the label such that it can be displayed in a manner such that its shape (geometrical form) is adapted to the shape (geometrical form) of the displayed map element.

When, for example, m-1 vertices (knots) $t_i$, i = 0, .., m, are used for the representation of the map element, these vertices are associated with coordinates $(x_i, y_i)$ in the digital map (or $(x_i, y_i, z_i)$ in the case of a three-dimensional digital map). According to the invention coordinates for positioning the label may be derived from the coordinates of vertices used for the spline(s). Accordingly, coordinates corresponding to (derived from) the ones of the vertices used for the spline representation of the map element can be used for the representation of the label (name) of the map element. For example, a number of the vertices can be chosen and coordinates shifted to some degree with respect to the coordinates of the vertices $(x_i+d_x, y_i+d_y)$, with constants $d_x$ and $d_y$, can be stored for the generation of the label, for example, the generation of one or more splines by which the label can be generated. Thereby, a label constituted by characters and/or symbols and/or icons following substantially the geometric shape (curve) or the outer contour of the map element can be displayed in the digital map.

Consequently, the readability of the labels of the map elements of a digital map can be improved. Moreover, since the coordinate values of the labels are pre-stored, display of curved labels does not result in a significant increase of the processor load when displaying the digital map. In particular, the correct positioning of the characters of the labels has not to be calculated online (in real time) but can be achieved by reading the corresponding coordinate values from the database storing.

The digital map may be a three-dimensional map. In particular, the three-dimensional digital map may be generated based on a digital terrain model. A terrain model is a three-dimensional model, e.g., a digital model of a landscape obtained by laser-scanning, for instance. A great variety of topographic terrain models is provided by official institutions as well as commercial providers. In principle, a digital terrain model is a digital file consisting of terrain elevations for ground positions at regularly or irregularly spaced horizontal intervals. The term "terrain" as used herein shall also comprise the three-dimensional topography of an urban area, a city, a village etc. The raster points included in the terrain model have three-dimensional coordinate values.

According to an embodiment the label is a three-dimensional label comprising three-dimensional representations of characters. According to another embodiment the label comprises characters and/or symbols and/or icons and the label is displayed such that the positioning and the shape of the characters and/or symbols and/or icons are adapted to the geometric form of the map element. In particular, the label can be given by a vector graphic object and/or a bitmap or the label comprises a vector graphic objet and/or a bitmap.

The above-described examples of the method for labeling a map element may comprise determining a portion of the map element where no labeling shall occur and/or a portion in the vicinity of the map element in the digital map where no labeling shall occur and labeling the map element with the label such that the portion of the map element where no labeling shall occur and/or the portion in the vicinity of the map element in the digital map where no labeling shall occur is not covered by the label. Thereby, it can be avoided that a part of the map element is unintentionally hidden by the label. The combination of avoiding hiding of a map element by a label and labeling with labels following the shape (contour) of a map element synergetically results in an unprecedented readability of the labels and identification of the corresponding map element by the label.

It is, furthermore, provided a method for route guidance implemented in a navigation system, in particular, a vehicle navigation system, with a display device comprising the steps of the method according to one of the above-described examples and providing guidance information to a user of the navigation system.

Moreover, it is provided a computer program product, comprising one or more computer readable media having computer-executable instructions for performing the steps of the method according to one of the above-described examples.

The above-mentioned need is also addressed by

a navigation database comprising

digital map data comprising data, in particular, data for coordinates, of a map element; data of a label for the map element;

and

references between the data of the label for the map element and the data of the map element.

The above-mentioned need is also addressed by

a navigation database comprising

digital map data comprising data of vertices of at least one spline by which a map element is represented;

data comprising coordinate values related to the vertices; and

data of a label for the map element; and

references between the data of the label for the map element and the coordinate values.

The references are (data) links by which the label is associated with the data of the map element or the coordinate values, respectively, such that when the label is accessed by a processing unit for display of the same the location in the digital map where the label is to be displayed can be determined by the associated data of the map element or the coordinate values, respectively.

Furthermore, it is provided a navigation system, in particular, a vehicle navigation system, comprising

a navigation database according to one of the above-mentioned examples; and

a display means configured to display a digital map based on data of the navigation database such that the map element of the digital map is labeled by the label with characters and/or symbols and/or icons substantially following the geometric shape of the map element.

In the above-mentioned examples for the navigation database or the navigation system the digital map can be a three-dimensional map and/or the label can be a three-dimensional label comprising three-dimensional representations of characters and/or symbols and/or icons. Moreover, the map element can be given by a bitmap or a vector graphic object and/or the label can be given by a vector graphic object.

Additional features and advantages of the present invention will be described with reference to the drawings. In the description, reference is made to the accompanying figure that is meant to illustrate an embodiment of the invention. It is understood that such an embodiment does not represent the full scope of the invention.

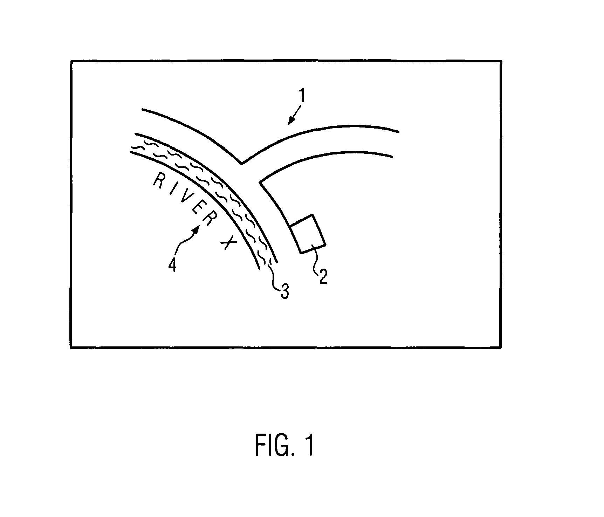

Figure 1 illustrates in a simplified manner a section of a digital map including a label in accordance with the present invention.

Figure 1 illustrates a part of a digital map showing some streets 1 and a parking lot 2 as well as a river 3. The river 3 represents a map element that is labeled by the label "River X" giving the name of the river. As it is shown in Figure 1 the label is adapted to the geometrical shape of the map element representing the river 3. According to the example, the label is generated by means of splines. The map element representing the river 3 may be generated by means of splines. Every spline function of a given degree, smoothness and domain partition, can be represented as a linear combination of B-splines (basis splines) of that same degree and smoothness. For example, a (cubic) Catmull-Rom spline can be employed. According to another example, B-splines can be evaluated by the well-known (Cox) de Boor algorithm. For a given non-decreasing sequence of m-1 vertices (knots) $t_i$, i = 0, .., m, a B-spline of degree n is a parametric curve composed of

$$C(t) = \sum_{i=1}^{m} P_i\, b_{i,n}(t)$$

where $P_i$ are control points and $b_{i,n}$ are basis functions defined by the recursion

$$b_{i,0}(t) = \begin{cases} 1, & \text{if } t_i \le t \le t_{i+1} \\ 0, & \text{else} \end{cases}$$

$$b_{i,n}(t) = \frac{t - t_i}{t_{i+n} - t_i}\, b_{i,n-1}(t) + \frac{t_{i+n+1} - t}{t_{i+n+1} - t_{i+1}}\, b_{i+1,n-1}(t)$$

The curve is completely contained in the convex hull of its control points provided that the basis functions all have the same sign (which usually is chosen positive). When the knots are equidistant, the B-splines are called uniform B-splines. The basis functions $b_{i,n}$ determine how strongly control points $P_i$ influence the curve. The stored raster points that form a subset of the raster points of the provided digital terrain model may be directly used as the control points $P_i$. Alternatively, a distance of these raster points to corresponding points of the three-dimensional B-spline surfaces (patches) may be minimized (see also below).

When the number of knots equals the degree of the B-spline, the latter represents a Bezier curve. Examples of B-splines that can be used in the inventive method include the constant B-spline (the most simple spline) with $b_{i,n}$ chosen as $b_{i,0}$, and the linear B-spline with

$$b_{i,1}(t) = \begin{cases} \dfrac{t - t_i}{t_{i+1} - t_i}, & \text{if } t_i \leq t \leq t_{i+1} \\ \dfrac{t_{i+2} - t}{t_{i+2} - t_{i+1}}, & \text{if } t_{i+1} \leq t \leq t_{i+2} \\ 0, & \text{else.} \end{cases}$$

Whereas the constant and linear B-splines are rather simple, a more satisfying interpolation can be obtained by uniform quadratic and uniform cubic B-splines. Uniform quadratic splines are calculated in matrix form for the i+1-th segment of the curve C by

$$C_i(t) = [t^2 \quad t \quad 1] \frac{1}{2} \begin{bmatrix} 1 & -2 & 1 \\ -2 & 2 & 0 \\ 1 & 1 & 0 \end{bmatrix} \begin{bmatrix} p_i \\ p_{i+1} \\ p_{i+2} \end{bmatrix}$$

and uniform cubic ones by

$$C_i(t) = [t^3 \quad t^2 \quad t \quad 1] \frac{1}{6} \begin{bmatrix} -1 & 3 & -3 & 1 \\ 3 & -6 & 3 & 0 \\ -3 & 0 & 3 & 0 \\ 1 & 4 & 1 & 0 \end{bmatrix} \begin{bmatrix} p_i \\ p_{i+1} \\ p_{i+2} \\ p_{i+3} \end{bmatrix}.$$

The splines are generated by means of vertices (knots) and coordinate values are stored corresponding to the coordinate values of the coordinates of the vertices. This means that according to an example, not the coordinate values of the vertices themselves are stored for the generation of the label but different coordinate values that are determined based on that coordinate values. If, for example, three vertices with coordinates $(x_1, y_1)$, $(x_2, y_2)$ and $(x_3, y_3)$ are used for drawing the map element that is to be labeled (in this example the river 3), for example, coordinates $(x_1+d_x, y_1+d_y)$, $(x_2+d_x, y_2+d_y)$ and $(x_3+d_x, y_3+d_y)$ are used for positioning the label 4), where $d_x$ and $d_y$ are constants by which the coordinate values of the vertices are shifted. Thus, the label 3 can be adapted to the geometrical shape of the river 4. However, the coordinates $(x_1, y_1)$, $(x_2, y_2)$ and $(x_3, y_3)$ themselves may be stored and subsequently retrieved for the labelling process.

Whereas Figure 1 shows in a simplified manner a section of a two-dimensional digital map as well as a two-dimensional label "River X", the invention can be implemented for a three-dimensional digital map including two-dimensional or three-dimensional labels. Moreover, it is envisaged that not only the positions of the letters of a label are adapted to the shape of the map element labeled but also the shape of the (three-dimensional) letters of the label can be adapted to that shape.

**Claims**

1. Method for labeling a map element of a digital map, comprising
storing coordinate values associated with a map element;
assigning a label to the map element; and
displaying the map element and displaying the assigned label in the digital map based on the stored coordinate values such that the label is adapted to the geometric form of the map element.

2. The method according to claim 1, further comprising representing the map element by at least one spline comprising vertices; and
storing coordinate values derived from coordinate values of at least some of the vertices of the at least one spline.

3. The method according to claim 1 or 2, wherein the digital map is a three-dimensional map, in particular, a three-dimensional map that is generated based on a digital terrain model.

4. The method according to one of the preceding claims, wherein the label is a three-dimensional label comprising three-dimensional representations of characters and/or symbols and/or icons.

5. The method according to one of the preceding claims, wherein the label comprises characters and/or symbols and/or icons and the label is displayed such that the positioning and the shape of the characters and/or symbols and/or icons are adapted to the geometric form of the map element.

6. The method according to one of the preceding claims, wherein the map element is given by a bitmap or a vector graphic object.

7. The method according to one of the preceding claims, wherein the label is given by a vector graphic object and/or a bitmap or the label comprises a vector graphic object and/or a bitmap.

8. The method according to one of the preceding claims, comprising
determining a portion of the map element where no labeling shall occur and/or a portion in the vicinity of the map element in the digital map where no labeling shall occur; and
wherein the label is displayed in the digital map such that the portion of the map element where no labeling shall occur and/or the portion in the vicinity of the map element in the digital map where no labeling shall occur is not covered by the label.

9. A method for route guidance implemented in a navigation system, in particular, a vehicle navigation system, with a display device comprising the steps of the method according to one of the preceding claims and providing guidance information to a user of the navigation system.

10. Computer program product, comprising one or more computer readable media having computer-executable instructions for performing the steps of the method according to one of the preceding claims.

11. A navigation database comprising
digital map data comprising data, in particular, data for coordinates, of a map element;
data of a label for the map element; and
references between the data of the label for the map element and the data of the map element.

12. The navigation database according to claim 11, wherein
the digital map data comprises data of vertices of at least one spline by which a map element is represented;
and further comprising
data comprising coordinate values related to the vertices; and
references between the data of the label for the map element and the coordinate values.

13. A navigation system, in particular, a vehicle navigation system, comprising

the navigation database according to claim 11 or 12; and

a display means configured to display a digital map based on data of the navigation database such that the map element of the digital map is labeled by the label with characters and/or symbols and/or icons substantially following the geometric shape of the map element.

14. The navigation database according to claim 11 or 12 or the navigation system according to claim 13, wherein the digital map is a three-dimensional map and/or the label is a three-dimensional label comprising three-dimensional representations of characters and/or symbols and/or icons.

15. The navigation database according to claim 11, 12 or 14 or the navigation system according to claim 13 or 14, wherein the map element is given by a bitmap or a vector graphic object and/or the label is given by a vector graphic object.

FIG. 1

Europäisches Patentamt

European Patent Office

Office européen des brevets

# EUROPEAN SEARCH REPORT

Application Number

EP 11 00 2359

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2008/298162 A1 (PASSONI GIOVANNI [IT])<br>4 December 2008 (2008-12-04)<br>* figures 1,2 *<br>* paragraphs [0005], [0012], [0013],<br>[0036], [0041], [0049] * | 1,2,5-7,<br>9-13,15<br>3,4,14 | INV.<br>G01C21/32<br>G01C21/36 |
| X | JP 8 194432 A (NIPPON DENSO CO)<br>30 July 1996 (1996-07-30)<br><br>* figure 10 *<br>* paragraphs [0060] - [0064] * | 1,5-7,<br>9-11,13,<br>15 | |
| X | US 2007/021911 A1 (KIKUCHI SHIN [JP] ET<br>AL) 25 January 2007 (2007-01-25)<br>* figures 6,9,10,13 *<br>* paragraphs [0057], [0060], [0061],<br>[0068] - [0070] * | 1,5-11,<br>13,15 | |
| X | EP 0 652 418 A1 (PHILIPS ELECTRONICS NV<br>[NL]; PHILIPS PATENTVERWALTUNG [DE])<br>10 May 1995 (1995-05-10)<br>* figures 4,6b *<br>* column 6, line 22 - column 7, line 3 *<br>* column 8, lines 44-57 * | 1,5-10 | TECHNICAL FIELDS SEARCHED (IPC)<br><br>G01C<br>G09B |
| X | US 2007/229513 A1 (BOWMAN GORDON GREGORY<br>[CA]) 4 October 2007 (2007-10-04)<br>* figures 6-14 * | 1,5,6,<br>10,11 | |
| X | US 6 565 610 B1 (WANG YAOGUANG [US] ET AL)<br>20 May 2003 (2003-05-20)<br>* figures 2,3 * | 11,12 | |
| Y | US 2010/085350 A1 (MISHRA PRAGYANA K [US]<br>ET AL) 8 April 2010 (2010-04-08)<br>* paragraphs [0042] - [0060] * | 3,14 | |

-/--

The present search report has been drawn up for all claims

| Place of search | Date of completion of the search | Examiner |
|---|---|---|
| The Hague | 7 September 2011 | Bruinsma, Maarten |

Europäisches
Patentamt

European
Patent Office

Office européen
des brevets

## EUROPEAN SEARCH REPORT

Application Number

EP 11 00 2359

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 829 823 A2 (PIONEER ELECTRONIC CORP [JP]; PIONEER DESIGN CORP [JP]) 18 March 1998 (1998-03-18) * figures 7,9 * ----- | 4 | |
| | | | **TECHNICAL FIELDS SEARCHED (IPC)** |

The present search report has been drawn up for all claims

| Place of search | Date of completion of the search | Examiner |
|---|---|---|
| The Hague | 7 September 2011 | Bruinsma, Maarten |

EPO FORM 1503 03.82 (P04C01)

## ANNEX TO THE EUROPEAN SEARCH REPORT
## ON EUROPEAN PATENT APPLICATION NO.

EP 11 00 2359

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2011

| Patent document cited in search report | | Publication date | Patent family member(s) | | Publication date |
|---|---|---|---|---|---|
| US 2008298162 | A1 | 04-12-2008 | BR PI0509315 A<br>CA 2558074 A1<br>CN 1980730 A<br>EP 1732675 A1<br>WO 2005094977 A1<br>ES 2311214 T3<br>IL 177804 A<br>IT MI20040137 U1<br>JP 2007530272 A | | 04-09-2007<br>13-10-2005<br>13-06-2007<br>20-12-2006<br>13-10-2005<br>01-02-2009<br>31-05-2010<br>30-06-2004<br>01-11-2007 |
| JP 8194432 | A | 30-07-1996 | NONE | | |
| US 2007021911 | A1 | 25-01-2007 | CN 1864186 A<br>JP 2005115174 A<br>WO 2005036503 A1 | | 15-11-2006<br>28-04-2005<br>21-04-2005 |
| EP 0652418 | A1 | 10-05-1995 | DE 69316898 D1<br>DE 69316898 T2<br>JP 3494718 B2<br>JP 7182493 A<br>US 5559938 A | | 12-03-1998<br>30-07-1998<br>09-02-2004<br>21-07-1995<br>24-09-1996 |
| US 2007229513 | A1 | 04-10-2007 | NONE | | |
| US 6565610 | B1 | 20-05-2003 | NONE | | |
| US 2010085350 | A1 | 08-04-2010 | NONE | | |
| EP 0829823 | A2 | 18-03-1998 | DE 69730391 D1<br>DE 69730391 T2<br>JP 3511561 B2<br>JP 10143065 A<br>US 5974876 A | | 30-09-2004<br>16-06-2005<br>29-03-2004<br>29-05-1998<br>02-11-1999 |